# EUROPÄISCHE PATENTSCHRIFT

(11) **EP 1 854 386 B1**
(45) Veröffentlichungstag und Bekanntmachung des Hinweises auf die Patenterteilung: **08.07.2009**
(21) Anmeldenummer: 06405202.0
(22) Anmeldetag: 12.05.2006
(51) Int. Cl.: A47J 31/54

(54) **Getränkebereitungsmaschine und Verfahren zum Betreiben einer Getränkebereitungsmaschine**
Beverage preparing machine and method for using a beverage preparing machine
Appareil de préparation de boissons et procédé d'utilisation d'un appareil de préparation de boissons

(43) Veröffentlichungstag der Anmeldung: 14.11.2007
(73) Patentinhaber: JURA ELEKTROAPPARATE AG, 4626 Niederbuchsiten (CH)
(72) Erfinder: Reyhanloo, Shahryar, 4573 Lohn Ammannsegg (CH)
(74) Vertreter: EGLI-EUROPEAN PATENT ATTORNEYS

(56) Entgegenhaltungen:
- EP-A- 0 362 954
- US-A- 4 994 641
- US-A- 5 440 972

## Beschreibung

Die Erfindung bezieht sich auf eine elektrische Getränkebereitungsmaschine zum Bereiten bzw. Bereitstellen eines Getränks und auf ein Verfahren zum Betreiben einer solchen Getränkebereitungsmaschine, wie aus dem Dokument US 4 994 641 bekannt.

Elektrische Getränkebereitungsmaschinen, beispielsweise zum Bereiten bzw. Bereitstellen von Kaffee und/oder Espresso und/oder Dampf und/oder heissem Wasser und/oder heisser Milch und/oder geschäumter Milch etc. gehören heute zur Grundausstattung vieler Haushalte, Restaurants, Betriebe oder Büros. Solche Maschinen werden aus praktischen Gründen meist derart betrieben, dass sie ständig - in der Regel über Netzstecker - mit einem Stromnetz verbunden sind, selbst wenn zeitweilig kein Bedarf an der Bereitung eines Getränks vorhanden ist.

Damit Getränkebereitungsmaschinen einerseits ständig mit einem Stromnetz verbunden sein können, andererseits derart betrieben werden können, dass ein möglichst geringer Energieverbrauch und ein hohes Mass an Sicherheit gewährleistet sind, sind solche Maschinen in der Regel mit mindestens einem Schalter ausgestattet, der von einem Benutzer betätigt werden kann, um die jeweilige Maschine bei Bedarf anzuschalten bzw. abzuschalten, d. h. um den (elektrischen) Strom, mit dem die Maschine versorgt wird, anzuschalten oder abzuschalten bzw. gegebenenfalls auf einen vorbestimmten Minimalwert zu reduzieren.

Bisher sind verschiedene Konzepte für Schalter, die für den Einsatz in Getränkebereitungsmaschinen bestimmt sind, bekannt geworden.

Konventionelle Getränkebereitungsmaschinen weisen in der Regel einen an ein Stromnetz anschliessbaren Stromkreis auf, an den jeweils eine Steuereinheit und eine oder mehrere von der Steuereinheit gesteuerte Funktionseinheiten, die jeweils zur Durchführung von einem von der Maschine durchführbaren Prozess bestimmt sind (z. B. zum Mahlen von Kaffee, zum Erhitzen von Wasser, zum Brühen von Kaffee, zum Bereiten von Dampf, zur Erfassung von Betriebsdaten der Maschine, zur Anzeige von Betriebsdaten und/oder des Betriebszustands der Maschine etc.), angeschlossen sind.

Bei vielen derartigen Getränkebereitungsmaschinen ist die Steuereinheit ständig mit Strom versorgt, wenn der Stromkreis an das Stromnetz angeschlossen ist. Ein Schalter ist vorgesehen, um durch Betätigen des Schalters den Strom, der für den Betrieb der jeweiligen Funktionseinheiten benötigt wird, anzuschalten bzw. abzuschalten. In diesem Fall geht die Maschine, wenn die Stromversorgung für die jeweiligen Funktionseinheiten abgeschaltet wird, in einen Zustand der Bereitschaft über (Standby-Betrieb). Da die Steuereinheit ständig mit Strom versorgt ist, ist die Steuereinheit somit immer bereit, bestimmte Funktionen auszuführen (beispielsweise eine Überwachung des Schalters, oder eine Kontrolle bestimmter Sensoren, die zur Überwachung des Betriebs der jeweiligen Maschine vorgesehen sind, oder eine Überwachung von Tasten oder Schnittstellen, die von Benutzern beeinflusst werden können, um die jeweilige Maschine zu bedienen).

Das vorstehend genannte Konzept hat den Nachteil, dass die Getränkebereitungsmaschine ständig Strom verbraucht. Weiterhin liegt ein gewisses Sicherheitsrisiko vor, da die Teile der elektrischen Einrichtungen, die ständig Strom verbrauchen, gegebenenfalls Schäden verursachen können, beispielsweise als Folge von auftretenden Defekten oder gefährlichen Handlungen von Benutzern. Es ist deshalb unvorteilhaft, eine derartige Getränkebereitungsmaschine über längere Zeit unkontrolliert zu lassen, wenn sie an ein Stromnetz angeschlossen ist.

Andere bekannte Getränkebereitungsmaschinen weisen - abweichend von dem vorstehend genannten Konzept - zwei Schalter in ihrem Stromkreis auf: einen ersten Schalter (Netzschalter), mit dem bei einer entsprechenden Betätigung des Schalters der Strom für alle an den Stromkreis angeschlossenen Verbraucher, d. h. sowohl für die Steuereinheit als auch für die jeweiligen Funktionseinheiten, an- bzw. abgeschaltet werden kann, und einen zweiten Schalter, mit dem bei einer entsprechenden Betätigung dieses Schalters ausschliesslich der für den Betrieb der jeweiligen Funktionseinheiten benötigte Strom an- bzw. abgeschaltet werden kann.

Das vorstehend genannte Konzept hat den Vorteil, dass der Strom im Stromkreis durch eine geeignete Betätigung der jeweiligen Schalter vollständig abgeschaltet werden kann. Dem steht der Nachteil gegenüber, dass ein erhöhtes Risiko besteht, dass ein Benutzer die zur Verfügung stehenden Schalter verwechselt und die jeweiligen Schalter nicht entsprechend ihrer Zweckbestimmung betätigt. Es besteht beispielsweise die Gefahr, dass ein Benutzer durch Betätigen des ersten Schalters gleichzeitig den Strom für die Steuereinheit und die Funktionseinheiten in einem Moment abschaltet, in dem eine der Funktionseinheiten gerade einen der zum Bereiten bzw. Bereitstellen eines Getränks vorgesehen Prozesse durchführt. Gegebenenfalls wird der Strom gerade dann abgeschaltet, wenn die Funktionseinheit sich gerade in einem Betriebszustand befindet, in dem ein Abschalten des Stroms problematisch ist. Letzteres trifft beispielsweise im Falle einer Funktionseinheit zu, welche mechanische Teile umfasst, die im Betrieb bewegt werden und bei einem Stromausfall in einer unerwünschten Stellung blockiert werden können.

Der vorliegenden Erfindung liegt die Aufgabe zugrunde, die vorstehend genannten Nachteile zu vermeiden und eine Getränkebereitungsmaschine und ein Verfahren zum Betreiben einer Getränkebereitungsmaschine vorzuschlagen, welche es ermöglichen, einen möglichst geringen Stromverbrauch und eine hohes Mass an Sicherheit zu erreichen mit Mitteln, die von einem Benutzer einfach zu bedienen sind.

Diese Aufgabe wird gelöst durch eine Getränkebereitungsmaschine mit den Merkmalen des Patentanspruchs 1 und durch ein Verfahren mit den Merkmalen des Patentanspruchs 11.

Die erfindungsgemässe Getränkebereitungsmaschine umfasst eine elektrisch betreibbare Steuereinheit, mindestes eine elektrisch betreibbare Funktionseinheit zur Durchführung eines am Bereiten bzw. Bereitstellen des Getränks beteiligten Prozesses, und einen Stromkreis zur Versorgung der Funktionseinheit und der Steuereinheit mit Strom. Weiterhin ist vorgesehen, dass der Stromkreis einen Schalter zum An- und/oder Abschalten des Stroms aufweist. Der Schalter umfasst einen ersten Schaltkontakt, einen zweiten Schaltkontakt und ein Betätigungselement, welches von einem Benutzer betätigt werden kann. Der Schalter ist so ausgebildet, dass der Strom durch eine erste Betätigung des Betätigungselements anschaltbar und durch eine auf die erste Betätigung folgende zweite Betätigung abschaltbar ist, wobei zum Anschalten des Stroms mindestens einer der Schaltkontakte in einen geschlossenen Zustand gebracht werden kann und zum Abschalten des Stroms beide Schaltkontakte in einen offenen Zustand gebracht werden können.

Die oben genannte Aufgabe ist gemäss der Erfindung dadurch gelöst, dass
a) der erste Schaltkontakt und der zweite Schaltkontakt im Stromkreis parallel geschaltet sind,
b) das Betätigungselement und der erste Schaltkontakt derart zusammenwirken, dass der erste Schaltkontakt durch die erste Betätigung des Betätigungselements in den geschlossenen Zustand bringbar ist und der erste Schaltkontakt nach der zweiten Betätigung des Betätigungselement den offenen Zustand einnimmt,
c) der zweite Schaltkontakt mit einem von der Steuereinheit bereitstellbaren Steuersignal derart steuerbar ist, dass der zweite Schaltkontakt in Abhängigkeit von dem jeweiligen Steuersignal entweder den geschlossenen oder den offenen Zustand einnimmt,
d) Erfassungsmittel zum Erfassen einer Betätigung des Betätigungselements vorhanden sind, welche Erfassungsmittel mit der Steuereinheit derart zusammenwirken, dass die jeweilige Betätigung von der Steuereinheit registriert wird,
e) die Steuereinheit derart ausgebildet ist,
   dass die Steuereinheit nach der ersten Betätigung des Betätigungselements einen Betriebszustand einnimmt, in dem das Steuersignal derart bereitgestellt ist, dass der zweite Schaltkontakt den geschlossenen Zustand einnimmt,
   und dass nach Registrieren der zweiten Betätigung des Betätigungselements das Steuersignal derart bereitgestellt ist, dass der zweite Schaltkontakt nach der zweiten Betätigung den offenen Zustand einnimmt.

Diese Getränkebereitungsmaschine hat den Vorteil, dass die Stromversorgung der Maschine durch Betätigen eines einzigen Betätigungselements angeschaltet und abgeschaltet werden kann. Das An- und Abschalten ist deshalb von einem Benutzer einfach und bequem durchzuführen.

Da nach dem Abschalten der Stromversorgung die beiden Schaltkontakte offen sind, ist der Stromkreis der Getränkebereitungsmaschine nach dem Abschalten stromlos, selbst wenn die Getränkebereitungsmaschine an einem Stromnetz angeschlossen ist. In diesem Zustand verbrauchen weder die jeweiligen Funktionseinheiten noch die Steuereinheit Strom. Die Getränkebereitungsmaschine kann deshalb auf einfache Weise Energie sparend betrieben werden.

Ein weiterer Vorteil ist darin zu sehen, dass die Betätigung des Betätigungselements von der Steuereinheit überwacht und insbesondere das Abschalten des Stroms von der Steuereinheit gesteuert wird. Ein Benutzer kann durch das Betätigen des Betätigungselements lediglich darauf unmittelbar Einfluss nehmen, welchen Zustand (offen oder geschlossen) der erste Schaltkontakt momentan einnimmt. Wenn das Betätigungselement zum Anschalten des Strom ein erstes Mal betätigt wird, dann wird durch Schliessen des ersten Schaltkontakts gewährleistet, dass die Steuereinheit in Betrieb gesetzt wird und die Steuereinheit einen Betriebszustand erreicht, in dem der momentane Zustand (offen oder geschlossen) des zweiten Schaltkontakts ausschliesslich von der Steuereinheit kontrolliert wird. Wenn das Betätigungselement anschliessend zum Abschalten des Stroms ein zweites Mal betätigt wird, dann wird der Strom im Stromkreis nicht unmittelbar abgeschaltet. Die Steuereinheit erfasst lediglich diese Betätigung und hält den Fluss des Stroms im Stromkreis durch eine entsprechende Steuerung des Zustands des zweiten Schaltkontakt so lange aufrecht, wie es für den Betrieb der Getränkebereitungsmaschine erforderlich ist. Es ist deshalb nicht möglich, dass der im Stromkreis fliessende Strom von einem Benutzer allein durch eine Betätigung des Schalters ohne Kontrolle der Steuereinheit abgeschaltet wird. Dadurch wird verhindert, dass die Stromversorgung der Getränkebereitungsmaschine allein durch eine Betätigung des Schalters an einem unverwünschten Zeitpunkt abgeschaltet werden kann. Auf diese Weise wird ein hohes Mass an Betriebssicherheit gewährleistet und die Benutzerfreundlichkeit verbessert.

In einer Ausführungsform der erfindungsgemässen Getränkebereitungsmaschine ist vorgesehen, dass die Funktionseinheit von der Steuereinheit gesteuert ist und nach der ersten Betätigung des Betätigungselements aus einem Ausgangszustand in einen Betriebszustand versetzbar ist, in dem die Funktionseinheit zur Durchführung des jeweiligen Prozesses bereit ist. Weiterhin ist vorgesehen, dass die Funktionseinheit nach der zweiten Betätigung des Schalters - gegebenenfalls kontrolliert von der Steuereinheit - in den Ausgangszustand oder in einen vorbestimmten Ruhezustand versetzt wird, bevor der zweite Schaltkontakt in den offenen Zustand versetzt und der Strom somit abgeschaltet wird.

Diese Ausführungsform hat den Vorteil, dass die Steuereinheit - falls das Betätigungselement zum Zwecke des Abschaltens des Stroms betätigt wird - die jeweiligen Funktionseinheiten der Getränkebereitungsmaschine gegebenenfalls kontrolliert in einen Zustand überführen kann, in dem der Strom abgeschaltet werden kann, ohne weitere Probleme zu verursachen. Eine Beschädigung der Getränkebereitungsmaschine, die mit dem Abschalten des Stroms ursächlich im Zusammenhang stehen könnte, kann so durch eine geeignete Spezifikation der Steuereinheit vermieden werden. Dadurch wird die Betriebssicherheit zusätzlich erhöht.

Bei einer weiteren Ausführungsform der erfindungsgemässen Getränkebereitungsmaschine ist die Steuereinheit derart ausgebildet, dass der zweite Schaltkontakt während einer Verzögerungszeit in Anschluss an die zweite Betätigung den geschlossenen Zustand einnimmt und anschliessend nach Ablauf der Verzögerungszeit den offenen Zustand einnimmt. Die Verzögerungszeit kann auf der Grundlage von Erfahrungswerten fest vorgegeben sein oder von der Steuereinheit abhängig vom jeweiligen momentanen Betriebszustand der Getränkebereitungsmaschine geeignet bestimmt werden. Diese Massnahme verbessert ebenfalls die Betriebssicherheit und optimiert den Energieverbrauch.

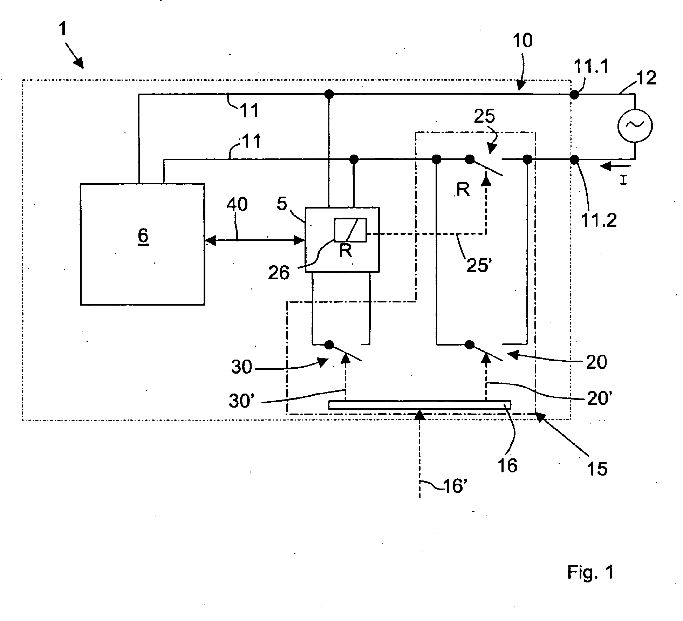

Im Folgenden werden weitere Einzelheiten der Erfindung und insbesondere vorteilhafte Ausführungsformen der erfindungsgemässen Getränkezubereitungsmaschine erläutert anhand einer schematischen Zeichnung. Es zeigt
Fig. 1: Eine Getränkebereitungsmaschine gemäss der Erfindung.

Fig. 1 zeigt eine Getränkebereitungsmaschine 1 zum Bereiten bzw. Bereitstellen eines Getränks oder mehrerer verschiedener Getränke, beispielsweise Kaffee und/oder Espresso und/oder Dampf und/oder heisses Wasser und/oder heisse Milch und/oder geschäumte Milch und/oder ein anderes Getränk.

Die Getränkebereitungsmaschine 1 umfasst eine elektrisch betreibbare Steuereinheit 5 und eine elektrisch betreibbare Funktionseinheit 6 zur Durchführung eines oder mehrerer am Bereiten bzw. Bereitstellen des jeweiligen Getränks beteiligten Prozesse. Die Steuereinheit 5 und die Funktionseinheit 6 sind an eine Stromversorgung 10 angeschlossen, welche einen internen Stromkreis 11 und ein mit dem Stromkreis 11 über Anschlüsse 11.1 und 11.2 verbundenes (externes) Stromnetz 12 umfasst. Über das Stromnetz 12 ist ein Strom I in den Stromkreis 11 einleitbar.

In diesem Zusammenhang wird beispielhaft angenommen, dass die Funktionseinheit 6 so ausgestattet ist, dass sie im Betrieb mehrere Prozesse durchführen kann: u. a. Mahlen von Kaffee, Erhitzen von Wasser, Brühen von Kaffee, Bereiten von Dampf, Erfassung von Betriebsdaten der Maschine, Anzeige von Betriebsdaten und/oder des Betriebszustands der Maschine etc..

Die vorstehend genannte Integration von mehreren Funktionen in die Funktionseinheit 6 ist offensichtlich willkürlich und für die Erfindung nicht relevant. Die Funktionseinheit 6 kann auch durch mehrere verschiedene Funktionseinheiten ersetzt werden, die jeweils nur einen Teil der genannten Funktionen abdecken und jeweils separat an den Stromkreis 11 angeschlossen werden können.

Der Stromkreis 11 umfasst in einer Parallelschaltung einen ersten Schaltkontakt 20 und einen zweiten Schaltkontakt 25, welche Schaltkontakte in einen geschlossenen Zustand oder eine offenen Zustand gebracht werden können. Demgemäss ist der Stromkreis 11 geschlossen und für den Strom I durchgängig, wenn mindestens einer der Schaltkontakte 20 bzw. 25 den geschlossenen Zustand einnimmt, und stromlos geschaltet, wenn beide Schaltkontakte 20 und 25 jeweils den offenen Zustand einnehmen.

Die Schaltkontakte 20 und 25 sind Bestandteile eines Schalters 15, der zum An- und Abschalten des Stroms I dient. Der Schalter 15 umfasst zusätzlich ein Betätigungselement 16, auf das ein Benutzer einwirken kann (in Fig. 1 angedeutet durch einen Pfeil 16'), um den Schalter 15 zu betätigen, und zwar durch eine erste Massnahme, um den Strom I einzuschalten, und durch eine zweite Massnahme, um den Strom I abzuschalten.

Die Art der Realisierung des Betätigungselements 16 ist in diesem Zusammenhang nicht relevant. Im Rahmen der Erfindung ist lediglich von Bedeutung, dass das Betätigungselement 16 mit dem ersten Schaltkontakt 20 derart zusammenwirkt, dass der Schaltkontakt 20 durch die Betätigung des Schalters 15 bzw. des Betätigungselements 16 mittels der ersten Massnahme in den geschlossen Zustand und mittels der zweiten Massnahme in den offenen Zustand versetzbar ist (die Wirkung des Betätigungselements 16 auf den Schaltkontakt 20 ist in Fig. 1 durch einen Pfeil 20' dargestellt).

Im vorliegenden Fall ist angenommen, dass das Betätigungselement 16 in Form einer mechanisch bewegbaren Taste realisiert ist, die jeweils dadurch betätigt werden kann, dass mechanisch ein Druck auf die Taste ausgeübt wird. Das Betätigungselement 16 kann aber auch auf andere Weise realisiert werden: beispielsweise in Form eines berührungssensitiven Elements, das durch eine Berührung betätigt werden kann, oder in Form einer Vorrichtung, die durch eine Fernsteuerung betätigt werden kann, oder in Form einer anderen für einen Benutzer zugänglichen Schnittstelle.

Das Betätigungselement 16 und der Schaltkontakt 20 müssen nicht in Form von separaten Einheiten ausgeführt sein. Der Schaltkontakt 20 und das Betätigungselement können auch als eine integrierte Einheit ausgebildet sein.

Das Betätigungselement 16 wirkt nicht unmittelbar auf den zweiten Schaltkontakt 25 ein. Im Rahmen der Erfindung ist vorgesehen, dass der Zustand des zweiten Schaltkontakts 25 von der Steuereinheit 5 kontrolliert wird und insbesondere veränderbar ist, wenn sich diese im Betrieb befindet, beispielsweise mit Hilfe eines Steuersignals, das von der Steuereinheit 5 bereitstellbar ist.

Im vorliegenden Fall ist angenommen, dass eine mit einem Steuersignal der Steuereinheit 5 ansteuerbare Schaltvorrichtung 26 vorhanden ist, welche in Abhängigkeit von dem Steuersignal derart auf den zweiten Schaltkontakt 25 einwirkt (wie in Fig. 1 durch einen Pfeil 25' dargestellt), dass der zweite Schaltkontakt 25 entweder den geschlossenen oder den offenen Zustand einnimmt.

Im vorliegenden Fall ist beispielhaft angenommen, dass der Schaltkontakt 25 in Verbindung mit der Schaltvorrichtung 26 in Form eines Relais R realisiert ist, wobei die Schaltvorrichtung 26 als Anker des Relais R ausgebildet ist und dieser Anker, gesteuert von der Steuereinheit 5, mit einem Strom versorgbar ist, um den Schaltkontakt 25 in den offenen oder den geschlossenen Zustand zu versetzen.

Der zweite Schaltkontakt 25 kann beispielsweise als Schliesskontakt des Relais R ausgebildet sein, d. h. als ein Schaltkontakt, welcher den offenen Zustand einnimmt, wenn die Schaltvorrichtung 26 (Anker) stromlos ist, und den geschlossenen Zustand einnimmt, wenn die Schaltvorrichtung 26 entsprechend angesteuert wird.

Der Schalter 15 umfasst weiterhin Erfassungsmittel 30, welche in der Lage sind, eine Betätigung des Schalters 15 bzw. des Betätigungselements 16 zu erfassen. Die Erfassungsmittel 30 sind mit der Steuereinheit 5 verbunden, um zu ermöglichen, dass Betätigungen des Schalters 15 bzw. des Betätigungselements 16 von der Steuereinheit 5 registriert werden können, wenn diese in Betrieb ist.

Im vorliegenden Fall sind die Erfassungsmittel 30 in Form eines dritten Schaltkontakts realisiert, welcher einen offenen Zustand oder einen geschlossenen Zustand einnehmen kann, wobei der dritte Schaltkontakt bei einer Betätigung des Schalters 15 bzw. des Betätigungselements 16 von einem dieser Zustände in den anderen dieser Zustände übergeht (die Wirkung einer Betätigung des Schalters 15 bzw. des Betätigungselements 16 auf die Erfassungsmittel 30 ist in Fig. 1 durch einen Pfeil 30' dargestellt).

Je nach Konstruktion des Betätigungselements 16 können die Erfassungsmittel 30 auch durch einen Sensor realisiert werden, welcher sensitiv für eine Betätigung des Schalters 15 ist: Beispielsweise durch einen (je nach Funktionsweise geeignet anzuordnenden) druckempfindlichen und/oder temperaturempfindlichen und/oder berührungssensitiven Sensor, welcher bei einer Betätigung des Schalters 15 bzw. des Betätigungselements 16 eine Reaktion zeigt, die von der Steuerung 5 registrierbar ist.

Als erster Schaltkontakt 20 sind konventionelle Schaltkontakte mit unterschiedlichen Charakteristiken geeignet: beispielsweise ein Impulsschaltkontakt, d. h. ein Schaltkontakt, welcher im Normalfall den offenen Zustand einnimmt und bei einer Betätigung des Schalters 15 bzw. des Betätigungselements 16 für eine vorbestimmte Zeitdauer den geschlossenen Zustand und anschliessend wieder den offenen Zustand einnimmt, oder ein Dauerschaltkontakt, welcher entweder dauerhaft den geschlossenen Zustand oder dauerhaft den offenen Zustand einnehmen kann und lediglich durch eine Betätigung des Schalters 15 bzw. des Betätigungselements 16 veranlasst wird, von den einem dieser Zustände in den anderen Zustand überzugehen.

Weiterhin umfasst die Getränkebereitungsmaschine 1 eine Verbindung 40 zwischen der Steuereinheit 5 und der Funktionseinheit 6. Die Steuereinheit 5 kann im Betrieb über die Verbindung 40 Daten und/oder Signale an die Funktionseinheit 6 übermitteln und/oder von der Funktionseinheit 6 empfangen, um die Funktionseinheit 6 während des Betriebs der Getränkebereitungsmaschine 1 zu steuern.

Die Getränkebereitungsmaschine 1 kann wie folgt betrieben werden.

Wenn die Getränkebereitungsmaschine 1 an das Stromnetz 12 angeschlossen, jedoch abgeschaltet ist, dann nehmen der erste Schaltkontakt 20 und der zweite Schaltkontakt 25 den offenen Zustand ein und der Stromkreis 11 ist dementsprechend stromlos.

Zum Anschalten der Getränkebereitungsmaschine 1 betätigt ein Benutzer den Schalter 15 bzw. das Betätigungselement 16 ein erstes Mal. Dadurch wird der erste Schaltkontakt 20 geschlossen und die Steuereinheit 5 in einen Betriebszustand versetzt, in dem die Steuereinheit 5 ein Steuersignal bereitstellt, welches die Schaltvorrichtung 26 veranlasst,
auf den zweiten Schaltkontakt 25 derart einzuwirken, dass dieser in den geschlossenen Zustand versetzt wird. Der zweite Schaltkontakt 25 verbleibt stabil im geschlossenen Zustand, sofern der Schalter 15 bzw. das Betätigungselement 16 nicht ein weiteres Mal betätigt wird.

Die Stromversorgung 10 ist nun angeschaltet und die Steuereinheit 5 und die Funktionseinheit 6 können den Normalbetrieb aufnehmen.

Die Steuereinheit 5 übernimmt zunächst aktiv die Steuerung der Funktionseinheit 6. Zu diesem Zweck kann die Steuereinheit 5 über die Verbindung 40 Daten und/oder Signale an die Funktionseinheit 6 übermitteln und/oder von der Funktionseinheit 6 empfangen, um den jeweiligen Zustand der Funktionseinheit 6 zu erfassen und die Funktionseinheit 6 gegebenenfalls zur Durchführung bestimmter vorgegebener Massnahmen zu veranlassen.

Bevor die Getränkebereitungsmaschine 1 zum Bereiten bzw. Bereitstellen eines gewünschten Getränks bereit ist, muss die Funktionseinheit 6 unter Kontrolle der Steuereinheit 5 in der Regel zunächst aus einem (beim Anschalten der Getränkebereitungsmaschine 1 vorliegenden) Ausgangszustand in einen vorbestimmten Betriebszustand versetzt werden, in dem die Funktionseinheit 6 zur Durchführung der jeweils erforderlichen Prozesse bereit ist. Es kann beispielsweise erforderlich sein, zunächst eine Funktionsüberprüfung vorzunehmen oder eine automatische Reinigung von Leitungen, die zur Weiterleitung einer Flüssigkeit bzw. eines von der Getränkebereitungsmaschine 1 bereiteten Getränks bestimmt sind, durchzuführen oder eine Heizung in Betrieb zu nehmen, bis eine vorbestimmte Betriebstemperatur erreicht ist, oder ähnliches.

Unter normalen Umständen erreicht die Funktionseinheit 5 schliesslich einen Zustand, in dem die Getränkebereitungsmaschine 1 zum Bereiten bzw. Bereitstellen eines Getränks bereit ist und vorbereitet ist, entsprechende Anforderungen eines Benutzers entgegenzunehmen (mit Hilfe von üblichen Mitteln, die in Fig. 1 nicht dargestellt sind).

Zum Abschalten der Getränkebereitungsmaschine 1 wird der Schalter 15 bzw. das Betätigungselement 16 ein zweites Mal betätigt. Der erste Schaltkontakt 20 ist voraussetzungsgemäss derart ausgebildet, dass er nun den offenen Zustand einnimmt. Die Betätigung des Schalters 15 bzw. des Betätigungselements 16 wird von den Erfassungsmitteln 30 erfasst und somit von der Steuereinheit 5 registriert. Die Steuereinheit 5 stellt anschliessend ein Steuersignal bereit, welches die Schaltvorrichtung 26 veranlasst, den zweiten Schaltkontakt 25 in den offenen Zustand übergehen zu lassen. Auf diese Weise wird der Stromkreis 11 unter Kontrolle der Steuereinheit 5 stromlos geschaltet.

Bevor die Steuereinheit 5 den Stromkreis 11 stromlos schaltet, überprüft die Steuereinheit 5 den momentanen Betriebszustand der Funktionseinheit 6. Wie bereits erwähnt, besteht die Möglichkeit, dass sich die Funktionseinheit 6 in dem Moment, in dem der Schalter 15 bzw. das Betätigungselement 16 von einem Benutzer das zweite Mal betätigt wird, in einem Betriebszustand befindet, in dem ein sofortiges Abschalten des Stroms unerwünscht ist oder sogar zu Beschädigungen führen kann. Die Steuereinheit 5 sorgt deshalb dafür, dass der Stromkreis 11 erst dann stromlos geschaltet wird, wenn die Funktionseinheit 6 momentan den Ausgangszustand einnimmt oder sich zumindest in einem vorbestimmten "Ruhezustand" befindet. Als Ruhezustand wird in diesem Zusammenhang ein Betriebszustand der Funktionseinheit 6 verstanden, in dem ein sofortiges Abschalten des Stroms I tolerierbar sein soll.

Entsprechend sorgt die Steuereinheit 5 - gegebenenfalls durch eine geeignete Ansteuerung der Funktionseinheit 6 - zur Sicherheit dafür, dass die Funktionseinheit 6 in den Ausgangszustand oder einen vorbestimmten Ruhezustand übergeht, bevor der Stroms I abgeschaltet wird.

Gegebenenfalls steuert die Steuereinheit 5 den zweiten Schaltkontakt 25 derart, dass der zweite Schaltkontakt 25 erst nach einer Verzögerungszeit in Anschluss an die zweite Betätigung des Schalters 15 bzw. des Schaltelements 16 den offenen Zustand einnimmt, wobei die Verzögerungszeit derart gewählt wird, dass die Funktionseinheit 6 den Ausgangszustand oder einen vorbestimmten Ruhezustand vor Ablauf der Verzögerungszeit erreicht.

Weiterhin ist vorgesehen, dass die Steuereinheit 5 vor dem Abschalten des Stroms I einen vorbestimmten Endzustand einnimmt. Dadurch ist sichergestellt, dass die Steuereinheit 5 immer einen definierten Betriebszustand einnimmt, bevor der Stromkreis 11 stromlos geschaltet wird.

In diesem Zusammenhang ist der "Schalter" 15 nicht zwingend als eine physische Einheit, die eine vorgegebene räumliche Struktur aufweist und als Ganzes unmittelbar am Stromkreis 11 angeordnet ist bzw. in den Stromkreis 11 integriert ist, auszulegen. In diesem Zusammenhang ist "Schalter" auch abstrakt als eine Bezeichnung für eine aus zwei Schaltkontakten und einem Bedienelement bestehende Funktionsgruppe auszulegen, wobei vorausgesetzt ist, dass die Schaltkontakte und das Bedienelement jeweils funktionell gemäss der Erfindung zusammenwirken. Die beiden Schaltkontakte und das Bedienelement können auch separate Bauelemente sein, die räumlich beliebig verteilt angeordnet werden können. Das Betätigungselement muss beispielsweise nicht mechanisch ortsgebunden unmittelbar am Stromkreis 11 angeordnet sein. Die beiden Schaltkontakte und das Bedienelement können auch aus mehreren Bauelementen aufgebaut sein oder Teile von anderen Baugruppen sein, die nicht zwingend unmittelbar am Stromkreis 11 angeordnet bzw. in den Stromkreis 11 integriert sein müssen, sondern auch jeweils räumlich beliebig verteilt angeordnet werden können. Letzteres trifft beispielsweise für das Relais R zur Realisierung des Schaltkontakts 25 im Falle der Ausführungsform gemäss Fig. 1 zu.

## Patentansprüche

1. Getränkebereitungsmaschine (1) zum Bereiten bzw. Bereitstellen eines Getränks,
mit einer elektrisch betreibbaren Steuereinheit (5),
mit mindestes einer elektrisch betreibbaren Funktionseinheit (6) zur Durchführung mindestens eines am Bereiten bzw. Bereitstellen des Getränks beteiligten Prozesses,
mit einem Stromkreis (11) zur Versorgung der Funktionseinheit (6) und der Steuereinheit (5) mit Strom (I),
welcher Stromkreis (11) einen Schalter (15) zum An- und/oder Abschalten des Stroms aufweist,
wobei der Schalter (15) einen ersten Schaltkontakt (20), einen zweiten Schaltkontakt (25) und ein betätigbares Betätigungselement (16) umfasst,
wobei der Strom (I) durch eine erste Betätigung des Betätigungselements (16) anschaltbar und durch eine auf die erste Betätigung folgende zweite Betätigung des Betätigungselements (16) abschaltbar ist,
und wobei zum Anschalten des Stroms (I) mindestens einer der Schaltkontakte (20, 25) in einen geschlossenen Zustand gebracht werden kann und zum Abschalten des Stroms (I) beide Schaltkontakte (20, 25) in einen offenen Zustand gebracht werden können,
**dadurch gekennzeichnet,**
**dass** der erste Schaltkontakt (20) und der zweite Schaltkontakt (25) im Stromkreis (11) parallel geschaltet sind,
**dass** das Betätigungselement (16) und der erste Schaltkontakt (20) derart zusammenwirken, dass der erste Schaltkontakt (20) durch die erste Betätigung des Betätigungselements (16) in den geschlossenen Zustand bringbar ist und der erste Schaltkontakt (20) nach der zweiten Betätigung des Betätigungselements (16) den offenen Zustand einnimmt,
**dass** der zweite Schaltkontakt (25) mit einem von der Steuereinheit (5) bereitstellbaren Steuersignal derart steuerbar ist, dass der zweite Schaltkontakt (25) in Abhängigkeit von dem jeweiligen Steuersignal entweder den geschlossenen oder den offenen Zustand einnimmt,
**dass** Erfassungsmittel (30) zum Erfassen einer Betätigung des Betätigungselements (16) vorhanden sind, welche Erfassungsmittel (30) mit der Steuereinheit (5) derart zusammenwirken, dass die jeweilige Betätigung von der Steuereinheit registriert wird,
wobei die Steuereinheit (5) derart ausgebildet ist,
**dass** die Steuereinheit nach der ersten Betätigung des Betätigungselements (16) einen Betriebszustand einnimmt, in dem das Steuersignal derart bereitgestellt ist, dass der zweite Schaltkontakt (25) den geschlossenen Zustand einnimmt,
und **dass** nach Registrieren der zweiten Betätigung des Betätigungselements (16) das Steuersignal derart bereitgestellt ist, dass der zweite Schaltkontakt (25) nach der zweiten Betätigung den offenen Zustand einnimmt.

2. Getränkebereitungsmaschine (1) nach Anspruch 1, wobei die Funktionseinheit (6) von der Steuereinheit (5) gesteuert ist und nach der ersten Betätigung des Betätigungselements (16) aus einem Ausgangszustand in einen Betriebszustand versetzbar ist, in dem die Funktionseinheit (6) zur Durchführung des jeweiligen Prozesses bereit ist.

3. Getränkebereitungsmaschine (1) nach einem der Ansprüche 1 oder 2, wobei die Steuereinheit (5) derart ausgebildet ist, dass der zweite Schaltkontakt (25) nach einer vorbestimmten Verzögerungszeit in Anschluss an die zweite Betätigung den offenen Zustand einnimmt.

4. Getränkebereitungsmaschine (1) nach Anspruch 3, wobei die Verzögerungszeit derart bemessen ist, dass die Funktionseinheit (6) vor Ablauf der Verzögerungszeit in den Ausgangszustand oder in einen vorbestimmten Ruhezustand versetzbar ist.

5. Getränkebereitungsmaschine (1) nach einem der Ansprüche 3-4, wobei die Verzögerungszeit so bemessen ist, dass die Steuereinheit (5) vor dem oder an dem Ende der Verzögerungszeit einen vorbestimmten Endzustand einnimmt.

6. Getränkebereitungsmaschine (1) nach einem der Ansprüche 1-5, wobei der zweite Schaltkontakt (25) ein Schliesskontakt eines Relais ist.

7. Getränkebereitungsmaschine (1) nach einem der Ansprüche 1-6, wobei der erste Schaltkontakt (20) ein Impulsschaltkontakt oder ein Dauerschaltkontakt ist.

8. Getränkebereitungsmaschine (1) nach einem der Ansprüche 1-7, wobei die Erfassungsmittel (30) einen dritten Schaltkontakt umfassen, welcher einen offenen Zustand oder einen geschlossenen Zustand einnehmen kann, wobei der dritte Schaltkontakt bei einer Betätigung des Betätigungselements (16) von einem dieser Zustände in den anderen dieser Zustände übergeht.

9. Getränkebereitungsmaschine (1) nach einem der Ansprüche 1-8, wobei die Erfassungsmittel (30) einen Sensor umfassen, welcher sensitiv für eine Betätigung des Betätigungselements (16) ist.

10. Getränkebereitungsmaschine (1) nach Anspruch 9, wobei der Sensor druckempfindlich, temperaturempfindlich und/oder berührungssensitiv ist.

11. Verfahren zum Betreiben einer Getränkebereitungsmaschine (1) zum Bereiten bzw. Bereitstellen eines Getränks, welche Getränkebereitungsmaschine umfasst:
eine elektrisch betreibbare Steuereinheit (5),
mindestes eine elektrisch betreibbare Funktionseinheit (6) zur Durchführung mindestens eines am Bereiten bzw. Bereitstellen des Getränks beteiligten Prozesses,
einen Stromkreis (11) zur Versorgung der Funktionseinheit (6) und der Steuereinheit (5) mit Strom (I),
welcher Stromkreis (11) einen Schalter (15) zum An- und/oder Abschalten des Stroms (I) umfasst,
wobei der Schalter (15) einen ersten Schaltkontakt (20), einen zweiten Schaltkontakt (25) und ein betätigbares Betätigungselement (16) umfasst,
wobei der Strom (I) durch eine erste Betätigung des Betätigungselement (16) anschaltbar und durch eine auf die erste Betätigung folgende zweite Betätigung abschaltbar ist,
welche Schaltkontakte (20, 25) zum Anschalten des Stroms (I) in einen geschlossenen Zustand oder zum Abschalten des Stroms in einen offenen Zustand gebracht werden können und welche Schaltkontakte (20, 25) im Stromkreis (11) parallel geschaltet sind,
wobei das Verfahren die folgenden Schritte umfasst:
zum Anschalten der Getränkebereitungsmaschine (1) wird das Betätigungselement (16) ein erstes Mal betätigt, wodurch der erste Schaltkontakt (20) geschlossen wird und
die Steuereinheit (5) in einen Betriebszustand versetzt wird, in dem die Steuereinheit (5) ein Steuersignal bereitstellt, mit welchem Steuersignal veranlasst wird, dass der zweite Schaltkontakt (25) in den geschlossenen Zustand versetzt wird;
zum Abschalten der Getränkebereitungsmaschine (1) wird das Betätigungselement (15) ein zweites Mal betätigt, wobei der erste Schaltkontakt (20) den offenen Zustand einnimmt und wobei die Betätigung des Betätigungselements (16) von der Steuereinheit (5) erfasst wird und die Steuereinheit (5) ein Steuersignal bereitstellt, mit welchem Steuersignal veranlasst wird, dass der zweite Schaltkontakt (25) nach dem Erfassen der Betätigung des Betätigungselements (16) in den offenen Zustand übergeht.

12. Verfahren nach Anspruch 11, wobei die Funktionseinheit (6) von der Steuereinheit (5) gesteuert wird und nach dem Anschalten aus einem Ausgangszustand in einen Betriebszustand gebracht wird, in dem die Funktionseinheit (6) zur Durchführung des jeweiligen Prozesses bereit ist.

13. Verfahren nach Anspruch 12, wobei der zweite Schaltkontakt (25) nach einer Verzögerungszeit nach dem Erfassen der Betätigung des Betätigungselements (16) in den offenen Zustand übergeht.

14. Verfahren nach einem der Ansprüche 11-13, wobei die Steuereinheit (5) die Funktionseinheit (6) in einen Ausgangszustand oder in einen Ruhezustand versetzt, bevor der Strom (I) abgeschaltet wird.

## Claims

1. Beverage preparation machine (1) for preparing or providing a beverage respectively,
with an electrically operable control unit (5),
with at least one electrically operable functional unit (6) for carrying out at least one process involved in preparing or providing the beverage,
with an electrical circuit (11) for supplying the functional unit (6) and the control unit (5) with current (I), said electrical circuit (11) having a switch (15) for switching the current on and/or off,
wherein the switch (15) comprises a first switch contact (20), a second switch contact (25) and an activation element (16) that can be activated,
wherein the current (I) can be switched on by means of a first activation of the activation element (16) and can be switched off by means of a second activation of the activation element (16) following the first activation,
and wherein at least one of the switch contacts (20, 25) can be brought into a closed state for switching on the current (I), and both switch contacts (20, 25) can be brought into an open state for switching off the current (I),
**characterized in that**
the first switch contact (20) and the second switch contact (25) are connected in the electrical circuit (11) in parallel,
the activation element (16) and the first switch contact (20) interact in such a manner that the first switch contact (20) can be brought into the closed state by the first activation of the activation element (16), and the first switch contact (20) adopts the open state following the second activation of the activation element (16),
the second switch contact (25) is controllable with a control signal that can be provided by the control unit (5) in such a manner that the second switch contact (25) adopts either the closed or the open state, in accordance with the respective control signal,
detection means (30) are available for detecting an activation of the activation element (16), and said detection means (30) interact with the control unit (5) in such a manner that the respective activation of the control unit is registered,
wherein the control unit (5) is constructed such that
after the first activation of the activation element (16) the control unit adopts an operating state in which the control signal is provided in such a manner that the second switch contact (25) adopts the closed state,
and that after registration of the second activation of the activation element (16) the control signal is provided in such a manner that following the second activation the second switch contact (25) adopts the open state.

2. The beverage preparation machine (1) according to Claim 1, wherein the functional unit (6) is controlled by the control unit (5) and, following the first activation of the activation element (16), can be transferred from an output state into an operating state, in which the functional unit (6) is ready to carry out the respective process.

3. The beverage preparation machine (1) according to one of Claims 1 or 2, wherein the control unit (5) is constructed in such a way that the second switch contact (25) adopts the open state after a predetermined delay time following the second activation.

4. The beverage preparation machine (1) according to Claim 3, wherein the length of the delay time is such that the functional unit (6) can be transferred into the output state or into a predetermined rest state before the delay time has elapsed.

5. The beverage preparation machine (1) according to one of Claims 3-4, wherein the length of the delay time is such that the control unit (5) adopts a predetermined final state before or at the end of the delay time.

6. The beverage preparation machine (1) according to one of Claims 1-5, wherein the second switch contact (25) is a make contact of a relay.

7. The beverage preparation machine (1) according to one of Claims 1-6, wherein the first switch contact (20) is an impulse switch contact or a continuous operation switch contact.

8. The beverage preparation machine (1) according to one of Claims 1-7, wherein the detection means (30) comprise a third switch contact, which can adopt an open state or a closed state, the third switch contact switching from one of these states to the other when the activation element (16) is activated.

9. The beverage preparation machine (1) according to one of Claims 1-8, wherein the detection means (30) have a sensor, which is sensitive to an activation of the activation element (16).

10. The beverage preparation machine (1) according to Claim 9, wherein the sensor is pressure sensitive, temperature sensitive and/or touch sensitive.

11. Method for operating a beverage preparation machine (1) for preparing or providing a beverage respectively, said beverage preparation machine comprising:
an electrically operable control unit (5),
at least one electrically operable functional unit (6) for carrying out at least one process involved in preparing or providing the beverage,
an electrical circuit (11) for supplying the functional unit (6) and the control unit (5) with current (I),
said electrical circuit (11) having a switch (15) for switching the current (I) on and/or off,
wherein the switch (15) comprises a first switch contact (20), a second switch contact (25) and an activation element (16) that can be activated,
wherein the current (I) can be switched on by means of a first activation of the activation element (16) and can be switched off by means of a second activation of the activation element (16) following the first activation,
said switch contacts (20, 25) can be brought into a closed state for switching on the current (I) or into an open state for switching off the current, and said switch contacts (20, 25) are connected in the electrical circuit (11) in parallel,
wherein the method comprises the following steps:
to switch on the beverage preparation machine (1) the activation element (16) is activated a first time, due to which the first switch contact (20) is closed and the control unit (5) is transferred into an operating state in which the control unit (5) provides a control signal, which control signal is used to cause the second switch contact (25) to be transferred into the closed state;
to switch on the beverage preparation machine (1) the activation element (16) is activated a second time, the first switch contact (20) adopting the open state and the activation of the activation element (16) being detected by the control unit (5) and the control unit (5) providing a control signal, which control signal is used to cause the second switch contact (25) to transfer into the open state after the detection of the activation of the activation element (16).

12. Method according to Claim 11, wherein the functional unit (6) is controlled by the control unit (5) and after being switched on, is brought from an output state into an operating state in which the functional unit (6) is ready to carry out the respective process.

13. Method according to Claim 12, wherein the second switch contact (25) transfers to the open state after a delay time following the detection of the activation of the activation element (16).

14. Method according to any one of Claims 11-13, wherein the control unit (5) transfers the functional unit (6) into an output state or into a rest state before the current (I) is switched off.

## Revendications

1. Machine de préparation de boissons (1), pour la préparation ou la mise à disposition d'une boisson,
avec une unité de commande (5) fonctionnant à l'électricité,
avec au moins une unité fonctionnelle (6) fonctionnant à l'électricité, pour l'exécution d'au moins un procédé participant à la préparation ou à la mise à disposition de la boisson,
avec un circuit électrique (11) pour l'alimentation en courant (I) de l'unité fonctionnelle (6) et de l'unité de commande (5),
ledit circuit (11) comportant un interrupteur (15) pour la marche/l'arrêt de l'alimentation électrique,
l'interrupteur (15) comprenant un premier contact de commutation (20), un deuxième contact de commutation (25) et un élément d'actionnement (16) apte à être actionné,
le courant (I) pouvant être allumé par un premier actionnement de l'élément d'actionnement (16) et éteint par un deuxième actionnement de l'élément d'actionnement (16), consécutif au premier actionnement,
et au moins l'un des contacts de commutation (20, 25) pouvant être mis dans un état fermé, pour l'allumage du courant (I), et les deux contacts de commutation (20, 25) pouvant être mis dans un état ouvert pour l'arrêt du courant (I),
**caractérisée en ce que**
le premier contact de commutation (20) et le deuxième contact de commutation (25) sont montés en parallèle dans le circuit (11),
l'élément d'actionnement (16) et le premier contact de commutation (20) coopèrent de telle manière que le premier contact de commutation (20) peut passer à l'état fermé lors du premier actionnement de l'élément d'actionnement (16), et le premier contact de commutation (20) passe à l'état ouvert après le deuxième actionnement de l'élément d'actionnement (16),
le deuxième contact de commutation (25) peut être commandé de telle manière, avec un signal de commande pouvant être fourni par l'unité de commande (5), que le deuxième contact de commutation (25) passe soit à l'état fermé soit à l'état ouvert, en fonction du signal de commande correspondant,
il est prévu des moyens de détection (30) pour la détection d'un actionnement de l'élément d'actionnement (16), lesdits moyens de détection (30) coopérant de telle manière avec l'unité de commande (5) que chaque actionnement est enregistré par l'unité de commande,
l'unité de commande (5) étant conçue de telle manière,
qu'après le premier actionnement de l'élément d'actionnement (16), l'unité de commande passe à un état de fonctionnement dans lequel le signal de commande est fourni de telle sorte que le deuxième contact de commutation (25) passe à un état fermé,
et le signal de commande est fourni de telle manière, après l'enregistrement du deuxième actionnement de l'élément d'actionnement (16), que le deuxième contact de commutation (25) passe à un état ouvert après le deuxième actionnement.

2. Machine de préparation de boissons (1) selon la revendication 1, dans laquelle l'unité fonctionnelle (6) est commandée par l'unité de commande (5) et peut, après le premier actionnement de l'élément d'actionnement (16), passer d'un état initial à un état de fonctionnement, dans lequel l'unité fonctionnelle (6) est prête pour l'exécution du procédé correspondant.

3. Machine de préparation de boissons (1) selon l'une des revendications 1 ou 2, dans laquelle l'unité de commande (5) est conçue de telle manière, que le deuxième contact de commutation (25) passe à l'état ouvert, suite au deuxième actionnement, après un temps d'attente prédéterminé.

4. Machine de préparation de boissons (1) selon la revendication 3, dans laquelle le temps d'attente est calculé de telle manière, que l'unité fonctionnelle (6) peut passer à l'état initial ou à un état de repos prédéterminé, avant l'écoulement du temps d'attente.

5. Machine de préparation de boissons (1) selon l'une des revendications 3 à 4, dans laquelle le temps d'attente est calculé de telle manière, que l'unité de commande (5) passe à un état final prédéterminé, avant ou vers la fin du temps d'attente.

6. Machine de préparation de boissons (1) selon l'une des revendications 1 à 5, dans laquelle le premier contact de commutation (25) est un contact à fermeture d'un relais.

7. Machine de préparation de boissons (1) selon l'une des revendications 1 à 6, dans laquelle le premier contact de commutation (20) est un contact de commutation par impulsion ou un contact de commutation permanent.

8. Machine de préparation de boissons (1) selon l'une des revendications 1 à 7, dans laquelle les moyens de détection (30) comprennent un troisième contact de commutation, capable de se mettre dans un état ouvert ou dans un état fermé, le troisième contact de commutation passant de l'un de ces états à l'autre état lors d'un actionnement de l'élément d'actionnement (16).

9. Machine de préparation de boissons (1) selon l'une des revendications 1 à 8, dans laquelle les moyens de détection (30) comprennent un capteur sensible à un actionnement de l'élément d'actionnement (16).

10. Machine de préparation de boissons (1) selon la revendication 9, dans laquelle le capteur est sensible à la pression, sensible à la température et/ou sensible au toucher.

11. Procédé pour le fonctionnement d'une machine de préparation de boissons (1) pour la préparation ou la mise à disposition d'une boisson, ladite machine de préparation de boissons comprenant :
une unité de commande (5) fonctionnant à l'électricité,
au moins une unité fonctionnelle (6) fonctionnant à l'électricité, pour l'exécution d'au moins un procédé participant à la préparation ou à la mise à disposition d'une boisson,
un circuit électrique (11) pour l'alimentation en courant (I) de l'unité fonctionnelle (6) et de l'unité de commande (5),
ledit circuit (11) comprenant un interrupteur (15) pour la mise en marche et/ou l'arrêt du courant (I),
l'interrupteur (15) comprenant un premier contact de commutation (20), un deuxième contact de commutation (25) et un élément d'actionnement (16) apte à être actionné,
le courant (I) pouvant être allumé par un premier actionnement de l'élément d'actionnement (16) et éteint par un deuxième actionnement de l'élément d'actionnement (16), consécutif au premier actionnement,
lesdits contacts de commutation (20, 25) pouvant être mis dans un état fermé, pour l'allumage du courant (I), ou dans un état ouvert pour l'arrêt du courant (I), et lesdits contacts de commutation (20, 25) étant montés en parallèle dans le circuit (11),
le procédé comprenant les étapes suivantes :
pour la mise en marche de la machine de préparation de boissons (1), l'élément d'actionnement (16) est actionné une première fois, fermant ainsi le premier contact de commutation (20) et faisant passer l'unité de commande (5) à un état de fonctionnement, dans lequel l'unité de commande (5) met à disposition un signal de commande, ledit signal de commande faisant passer le deuxième contact de commutation (25) à l'état fermé ;
pour éteindre la machine de préparation de boissons (1), l'élément d'actionnement (16) est actionné une deuxième fois, faisant passer le premier contact de commutation (20) à l'état ouvert et permettant à l'unité de commande (5) de détecter l'actionnement de l'élément d'actionnement (16), l'unité de commande (5) mettant à disposition un signal de commande, ledit signal de commande faisant passer le deuxième contact de commutation (25) à l'état ouvert, après détection de l'actionnement de l'élément d'actionnement (16).

12. Procédé selon la revendication 11, dans lequel l'unité fonctionnelle (6) est commandée par l'unité de commande (5) et passe, après l'actionnement, d'un état initial à un état de fonctionnement, dans lequel l'unité fonctionnelle (6) est prête pour l'exécution du procédé correspondant.

13. Procédé selon la revendication 12, dans lequel le deuxième contact de commutation (25) passe à l'état ouvert après un temps d'attente, suite à la détection de l'actionnement de l'élément d'actionnement (16).

14. Procédé selon l'une des revendications 11 à 13, dans lequel l'unité de commande (5) fait passer l'unité fonctionnelle (6) à un état initial ou à un état de repos avant que le courant (I) ne soit éteint.
